# EUROPÄISCHE PATENTSCHRIFT

(11) **EP 1 060 930 B1**
(45) Veröffentlichungstag und Bekanntmachung des Hinweises auf die Patenterteilung: **03.09.2003**
(21) Anmeldenummer: 00112787.7
(22) Anmeldetag: 16.06.2000
(51) Int. Cl.: B60J 10/02, C09J 5/02

(54) **Verfahren zum Herstellen und Verkleben einer mit Kunststoff ummantelten Scheibe**
Method for producing a window with a polymer frame and bonding thereof
Procédé de fabrication et d'adhésion d'une vitre encadrée par un polymère

(30) Priorität: 16.06.1999 DE 19927473
(43) Veröffentlichungstag der Anmeldung: 20.12.2000
(73) Patentinhaber: DURA Automotive Body & Glass Systems GmbH & Co. KG, 58840 Plettenberg (DE)
(72) Erfinder: Erner, Wolfgang, 58640 Iserlohn (DE)
(74) Vertreter: Gossel, Hans K., Dipl.-Ing.

(56) Entgegenhaltungen:
- WO-A-94/18255
- US-A- 5 723 196

## Beschreibung

Die Erfindung betrifft ein Verfahren zum Herstellen und Verkleben einer mit Kunststoff ummantelten Scheibe, vorzugsweise für KFZ, bei dem der Rand der Scheibe, vorzugsweise nach Auftragen eines Klebers oder eines Primers, mit einer ersten Kunststoffkomponente umspritzt wird. Ein Verfahren dieser Art ist in US 57 23 196 A offenbast.

In der Automobilindustrie werden derartige mit Kunststoff ummantelte oder umspritzte Scheiben zur Fahrzeugverglasung, z.B. als Fensterscheiben, verwendet, die in einem späteren Arbeitsgang, also beispielsweise Wochen oder Monate nach Herstellung der ummantelten Scheibe, in entsprechenden Ausnehmungen von Karosserien verklebt werden. Dieses Verkleben der ummantelten Scheiben nach einer längeren Zeit von beispielsweise Wochen oder Monaten ist jedoch bei vielen Kunststoffen, die sich besonders zur Ummantelung der Scheiben eignen, problematisch, weil viele der geeigneten Kunststoffe sich zum Verkleben nur mit einem sog. Kurzzeit-Primer versehen lassen, wenn die Ummantelung für den Kleber nicht mit einer einen Formschluß bewirkenden Nut versehen ist. Dies hat zur Folge, daß bei dem späteren Verkleben der ummantelten Scheibe die aus Kunststoff bestehende Ummantelung gereinigt und mit einem die Verklebung vermittelnden Primer beschichtet werden muß. Hierdurch entstehen zeitaufwendige Arbeitsgänge, so daß ein Bedürfnis besteht, bei der späteren Verklebung ohne besondere Vorbereitung oder Nacharbeitung die von dem Hersteller gelieferten ummantelten Scheiben nur durch Auftrag eines Klebers verkleben zu können.

Das beschriebene Problem ergibt sich nicht, wenn-die Scheiben mit PUR ummantelt werden, weil sich werksseitig eine PUR-Ummantelung für eine spätere Verklebung vorbereiten läßt. PUR ist aber als ummantelnder Kunststoff für Scheiben, deren Ummantelung besondere Profilformen aufweisen und insbesondere auch mit Dichtlippen versehen sein kann, weniger geeignet und zu teuer.

Aus der US 5723196 A ist ein Verfahren zum Herstellen einer mit einem Rahmen aus Polymer ummantelten Scheibe für Kraftfahrzeuge bekannt, bei dem der Rand der Scheibe mit einem Kunststoff umspritzt wird. In dem Rahmen ist eine hinterschnittene Vertiefung vorhanden, in die ein Klebematerial eingespritzt wird.

Aufgabe der Erfindung ist es, ein Verfahren vorzuschlagen, nach dem sich nach dem eingangs angegebenen Verfahren hergestellte Scheiben, die nicht mit einer PUR-Ummantelung versehen sind, nach längerer Zeit noch verkleben lassen, ohne daß die Kunststoffummantelung einer besonderen Nachbehandlung unterzogen wird.

Erfindungsgemäß wird diese Aufgabe durch die Merkmale des Anspruchs 1 oder durch die Merkmale des Anspruchs 2 gelöst. Nach dem ersten Vorschlag wird auf die erste Kunststoffkomponente ein Primer aufgetragen und auf diesen eine zweite Kunststoffkomponente aufgebracht. Die zweite Kunststoffkomponente wird durch Auftrag eines Langzeit-Primers zum späteren Verkleben mit einem Kunststoffkleber vorbereitet. Nach dem zweiten Vorschlag wird eine zweite Kunststoffkomponente formschlüssig mit der ersten Kunststoffkomponente verbunden. Die zweite Kunststoffkomponente wird durch Auftrag eines Langzeit-Primers zum späteren Verkleben mit einem Kunststoffkleber vorbereitet.

Bei Primem handelt es sich um Haftvermittler, die heute käuflich erworben werden können und ein festes und wasserdichtes Verkleben von Kunststoffen mit Glas oder anderen Kunststoffen ermöglichen. Es gibt sog. Kurzzeit-Primer und Langzeit-Primer, wobei sich viele Kunststoffe durch Aufbringen von Kurzzeit-Primer verkleben lassen.

Erfindungsgemäß wird nach einer ersten Alternative auf die aus der ersten Kunststoffkomponente bestehende Ummantelung der Scheibe ein Primer, und zwar ein Kurzzeit-Primer, aufgebracht, der die Verbindung einer zweiten Kunststoffkomponente mit der ersten Kunststoffkomponente ermöglicht. Diese zweite Kunststoffkomponente ist von der Art, daß sie ein Verkleben mit einem geeigneten Kunststoffkleber dadurch ermöglicht, daß auf diese ein Langzeit-Primer aufgebracht wird. Die erfindungsgemäß hergestellte und vorbereitete ummantelte Scheibe läßt sich daher auch noch nach Wochen beispielsweise auch nach zwei bis drei Monaten noch durch Verkleben weiterverarbeiten und als Fensterscheibe mit einem geeigneten Kunststoffkleber in eine Karosserie einsetzen.

Durch das erfindungsgemäße Verfahren wird die Herstellung einer Ummantelung der Scheiben im Zwei-Komponenten-Kunststoff-Spritzverfahren vermieden, so daß auch die teuren Zwei-K-Werkzeuge und Zwei-K-Maschinen vermieden werden können und sich in einfacher Weise mit einfachen Werkzeugen Ummantelungen mit beliebiger Geometrie herstellen lassen.

Als erste Kunststoffkomponente eignet sich insbesondere PVC, TPE oder TPU, die durch Kurzzeit-Primer mit einem anderen Kunststoff verklebt werden können.

Als zweite Kunststoffkomponente wird auf die erste Kunststoffkomponente vorzugsweise PUR aufgebracht, das sich durch werksseitigen Auftrag eines Langzeit-Primers auch noch nach längerer Zeit durch einen geeigneten Kunststoffkleber verkleben läßt.

Zweckmäßigerweise ist der Kunststoffkleber PUR oder ein Kleber auf PUR-Basis.

Die erste Kunststoffkomponente wird zweckmäßigerweise mit einer Spritzgußmaschine aufgebracht, die durch verhältnismäßig einfache Formen die Herstellung der Kunststoffummantelung mit beliebigen gewünschten Profilen ermöglicht.

Zweckmäßigerweise wird die aufgespritzte erste Kunststoffkomponente mit einem Kanal zur Aufnahme der zweiten Kunststoffkomponente versehen.

Nach einer zweiten Alternative der erfindungsgemäßen Lösung ist vorgesehen, daß der Kanal ein U-förmiges Profil mit hinterschnittenen, z.B. schwalbenschwanzförmig hinterschnittenen, seitlichen Flanken aufweist. Ist beispielsweise eine Nut mit hinterschnittenen seitlichen Flanken vorgesehen, kann sich die zweite Kunststoffkomponente formschlüssig in dem Kanal oder der Nut verkrallen, ohne daß es zusätzlich noch des Auftrags eines Primers bedarf.

Nach dem Herstellen der Scheiben mit der aus der ersten Kunststoffkomponente bestehenden Ummantelung wird in weiterer Ausgestaltung der Erfindung die zweite Kunststoffkomponente nach Einlegen der umspritzten Scheibe in eine Schablone aufgebracht.

Zum einfachen Aufbringen der zweiten Komponente ist in weiterer Ausgestaltung der Erfindung vorgesehen, daß der Primer und die zweite Kunststoffkomponente mit einem Zwei-Kopf-Roboter aufgebracht werden, von denen der erste Kopf den Primer und der zweite Kopf die zweite Kunststoffkomponente auftragen.

Auf die zweite Kunststoffkomponente wird sodann werksseitig ein Langzeit-Primer aufgebracht, so daß dem Kunden eine ummantelte Scheibe geliefert werden kann, die ohne besondere Vorbereitung nur durch Auftrag eines geeigneten Klebers, vorzugsweise PUR, verklebt werden kann.

Ein Ausführungsbeispiel der Erfindung wird nachstehend anhand der Zeichnung näher erläutert. In dieser zeigt in schematischer Darstellung
- Fig. 1: den Randbereich einer Scheibe, auf den beidseits ein Primer für ein dreiseitiges Ummanteln mit einer Kunststoffkomponente aufgebracht ist,
- Fig. 2: den in den Formteil einer Spritzgießmaschine eingelegten Randbereich einer Scheibe, die nur einseitig mit einem Primer beschichtet ist,
- Fig. 3: die nach Fig. 2 mit einer Ummantelung versehene Scheibe, die zur Weiterbehandlung in eine Schablone eingelegt ist,
- Fig. 4: den Randbereich einer Scheibe, die in der Schablone gemäß Fig. 3 mit einem Kurzzeit-Primer und einer zweiten Kunststoffkomponente mit einem Langzeitprimerauftrag versehen ist, auf den sodann durch den Kunden eine Kleberaupe aus PUR zur Verklebung beispielsweise in einer Ausnehmung einer Karosserie aufgetragen worden ist, und
- Fig. 5: eine andere Ausführungsform einer Scheibe nach Fig. 4, die zur Verklebung durch den Kunden mit einer Kleberaupe aus PUR versehen worden ist.

Zur Herstellung einer mit einer Kunststoffummantelung versehenen Scheibe, die von einem Kunden auch nach längerer Zeit nach der Herstellung ohne besondere Vorbereitungen nur durch Auftrag eines geeigneten Klebers beispielsweise in Aussparungen der Karosserie verklebt werden kann, wird auf den Randbereich der Scheibe 1 ein Primer 2 aufgetragen.

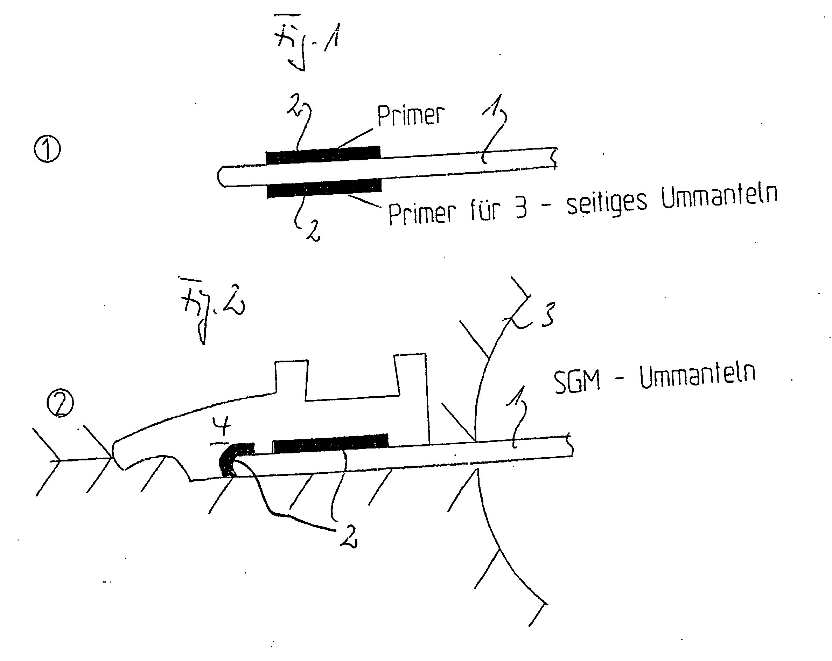

Bei dem Ausführungsbeispiel nach Fig. 1 ist der die Haftung vermittelnde Primer beidseitig auf den Randbereich der Scheibe 1 aufgetragen, so daß diese für ein dreiseitiges Ummanteln, also eine U-förmige Einfassung mit einem geeigneten Kunststoff, vorbereitet ist. Die U-förmige Ummantelung einer gemäß Fig. 1 vorbereiteten Scheibe erfolgt sodann in üblicher Weise in einer Spritzgußmaschine.

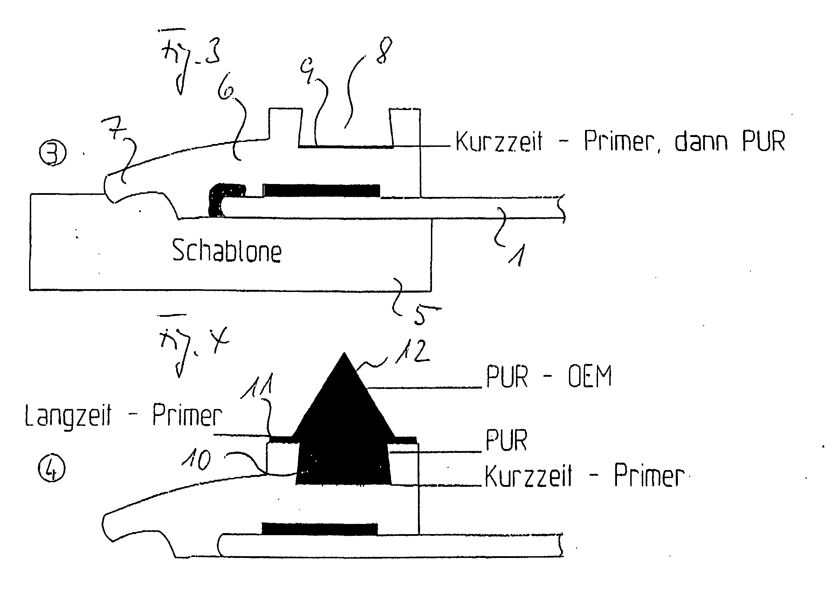

Aus Fig. 2 ist schematisch der in den Formbereich einer Spritzgußmaschine 3 eingelegte Randbereich einer Glasscheibe 1 ersichtlich, die zur zweiseitigen Ummantelung mit einem Primerauftrag 2 versehen ist. Der Formhohlraum 4 der Spritzgußmaschine wird anschließend in üblicher Weise mit einem geeigneten Kunststoff unter Druck gefüllt.

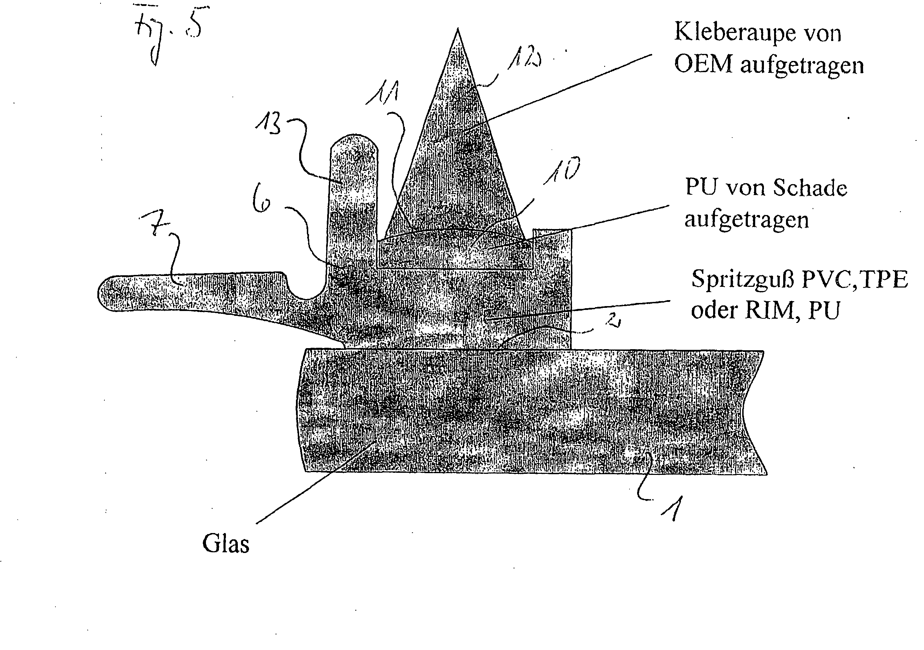

Aus Fig. 3 ist der ummantelte Randbereich einer Scheibe 1 ersichtlich, die zur Weiterbehandlung in eine Schablone 5 eingelegt ist. Die in der Spritzgießmaschine 3 aufgebrachte Ummantelung 6 weist eine seitliche Dichtlippe 7 und einen Kanal 8 auf, auf dessen Grund ein Kurzzeit-Primer 9 aufgebracht ist. Die Beschichtung mit dem Kurzzeit-Primer 9 und der anschließende Auftrag einer zweiten Kunststoffkomponente 10 erfolgt durch einen Roboter mit zwei Auftragsköpfen, von denen der erste den Kurzzeit-Primer und der zweite die zweite Kunststoffkomponente 10, vorzugsweise aus PUR, aufträgt.

Ist der Kanal 8, wie aus den Fig. 3 und 4 ersichtlich, mit schwalbenschwanzförmig hinterschnittenen seitlichen Flanken versehen, läßt sich die zweite Kunststoffkomponente 10 formschlüssig mit der Ummantelung 6 verbinden, ohne daß zusätzlich noch der Primer 9 aufgebracht werden müßte.

Die in der beschriebenen Weise hergestellte Kunststoffummantelung bestehend aus einer ersten Komponente 6 und einer zweiten Komponente 10 wird sodann werksseitig noch mit einem Langzeit-Primer 11 versehen.

Die so vorbereitete mit einer Randummantelung versehen Scheibe wird sodann an den Kunden ausgeliefert. Auch nach längerer Lagerzeit kann der Kunde sodann die ummantelte Scheibe verarbeiten und beispielsweise in der Fensteraussparung einer Karosserie dadurch verkleben, daß er auf den Langzeit-Primer eine Kleberaupe aus einem geeigneten Kunststoff, beispielsweise PUR, 12 aufträgt, wie aus Fig. 4 ersichtlich ist.

Aus Fig. 5 ist ein weiteres Ausführungsbeispiel einer zur Verklebung vorbereiteten mit einer Ummantelung versehenen Scheibe 1 ersichtlich. Die vorbereitete Scheibe besteht aus einer Randummantelung 6 aus einer ersten Kunststoffkomponente 1, beispielsweise PVC, TPE oder TPU. Diese Ummantelung ist auf die Scheibe nach Aufbringen eines Kurzzeit-Primers 2 in einer Spritzgießmaschine aufgebracht worden.

Die Ummantelung ist mit einer Dichtlippe 7, einem einen Abstandshalter bildenden Profilteil 13 und einem Kanal versehen, dessen Grund wiederum mit einem Kurzzeit-Primer und einer PU-Beschichtung 10 versehen ist, die die zweite Kunststoffkomponente bildet. Auf die zweite Kunstoffkomponente 10 ist werksseitig ein Langzeit-Primer 11 aufgetragen worden. Die so vorbereitete Scheibe wird dann an den Kunden geliefert. Zum Verkleben braucht der Kunde nur noch die Kleberaupe 12, beispielsweise aus einem PUR-Kleber, aufzubringen, so daß er ohne weitere Vorbereitung die Verklebung der Scheibe vornehmen kann.

## Patentansprüche

1. Verfahren zum Herstellen und Verkleben einer mit thermoplastischem Kunststoff ummantelten Scheibe (1), vorzugsweise für Kraftfahrzeuge, bei dem der Rand der Scheibe (1), vorzugsweise nach Auftragen eines Klebers oder eines Primers (2), mit einer ersten Kunststoffkomponente (6) umspritzt wird, **dadurch gekennzeichnet, daß** auf die erste Kunststoffkomponente (6) ein Primer (9) aufgetragen und auf diesen eine zweite Kunststoffkomponente (10) aufgebracht wird, und daß die zweite Kunststoffkomponente (10) durch Auftrag eines Langzeit-Primers (11) zum späteren Verkleben mit einem Kunststoffkleber vorbereitet wird.

2. Verfahren zum Herstellen und Verkleben einer mit thermoplastischem Kunststoff ummantelten Scheibe (1), vorzugsweise für Kraftfahrzeuge, bei dem der Rand der Scheibe (1), vorzugsweise nach Auftragen eines Klebers oder eines Primers (2), mit einer ersten Kunststoffkomponente (6) umspritzt wird, **dadurch gekennzeichnet, daß** eine zweite Kunststoffkomponente (10) formschlüssig mit der ersten Kunststoffkomponente (6) verbunden wird, und daß die zweite Kunststoffkomponente (10) durch Auftrag eines Langzeit-Primers (11) zum späteren Verkleben mit einem Kunststoffkleber vorbereitet wird.

3. Verfahren nach Anspruch 2, **dadurch gekennzeichnet, daß** auf die erste Kunststoffkomponente (6) ein Primer (9) aufgetragen wird, bevor die zweite Kunststoffkomponente (10) formschlüssig mit der ersten Kunststoffkomponente (6) verbunden wird.

4. Verfahren nach einem der vorhergehenden Ansprüche, **dadurch gekennzeichnet, daß** die Scheibe (1) mit einer ersten Kunststoffkomponente (6) umspritzt wird, die aus PVC, TPE oder TPU besteht.

5. Verfahren nach einem der vorhergehenden Ansprüche, **dadurch gekennzeichnet, daß** auf die erste Kunststoffkomponente (6) PUR als zweite Kunststoffkomponente (10) aufgebracht wird.

6. Verfahren nach einem der vorhergehenden Ansprüche, **dadurch gekennzeichnet, daß** der Kunststoffkleber PUR oder ein Kleber auf PUR-Basis ist.

7. Verfahren nach einem der vorhergehenden Ansprüche, **dadurch gekennzeichnet, daß** die erste Kunststoffkomponente (6) mit einer Spritzgußmaschine aufgebracht wird.

8. Verfahren nach einem der vorhergehenden Ansprüche, **dadurch gekennzeichnet, daß** die aufgespritzte erste Kunststoffkomponente (6) mit einem Kanal (8) zur Aufnahme der zweiten Kunststoffkomponente (10) versehen wird.

9. Verfahren nach Anspruch 8, **dadurch gekennzeichnet, daß** der Kanal (8) ein U-förmiges Profil mit hinterschnittenen, z.B. schwalbenschwanzförmig hinterschnittenen, seitlichen Flanken aufweist.

10. Verfahren nach einem der vorhergehenden Ansprüche, **dadurch gekennzeichnet, daß** die zweite Kunststoffkomponente (10) nach Einlegen der umspritzten Scheibe (1) in eine Schablone (5) aufgebracht wird.

11. Verfahren nach einem der vorhergehenden Ansprüche, **dadurch gekennzeichnet, daß** der Primer und die zweite Kunststoffkomponente (10) mit einem Zwei-Kopf-Roboter aufgebracht werden, von denen der erste Kopf den Primer und der zweite Kopf die zweite Kunststoffkomponente (10) auftragen.

## Claims

1. Process for the production and adhesive bonding of a pane (1) encapsulated by a thermoplastic and preferably intended for motor vehicles, by using an injection process to apply a first plastics component (6) around the margin of the pane (1), preferably after application of an adhesive or a primer (2), **characterized in that** a primer (9) is applied to the first plastics component (6), and a second plastics component (10) is applied to this primer, and **in that** the second plastics component (10) is prepared by application of a long-term-active primer (11) for subsequent adhesive bonding, using a synthetic polymer adhesive.

2. Process for the production and adhesive bonding of a pane (1) encapsulated by a thermoplastic and preferably intended for motor vehicles, by using an injection process to apply a first plastics component (6) around the margin of the pane (1), preferably after application of an adhesive or a primer (2), **characterized in that** a second plastics component (10) is interlocked with the first plastics component (6), and **in that** the second plastics component (10) is prepared by application of a long-term-active primer (11) for subsequent adhesive bonding, using a synthetic polymer adhesive.

3. Process according to Claim 2, **characterized in that** a primer (9) is applied to the first plastics component (6) before the second plastics component (10) is interlocked with the first plastics component (6).

4. Process according to one of the preceding claims, **characterized in that** an injection process is used to apply a first plastics component (6) composed of PVC, TPE or TPU around the pane (1).

5. Process according to one of the preceding claims, **characterized in that** PU is applied as second plastics component (10) to the first plastics component (6).

6. Process according to one of the preceding claims, **characterized in that** the synthetic polymer adhesive is PU or a PU-based adhesive.

7. Process according to one of the preceding claims, **characterized in that** an injection moulding machine is used to apply the first plastics component (6).

8. Process according to one of the preceding claims, **characterized in that** a channel (8) is provided in the first injected plastics component (6) to receive the second plastics component (10).

9. Process according to Claim 8, **characterized in that** the channel (8) has a U-shaped profile with undercut sides, e.g. sides undercut in a swallow-tail shape.

10. Process according to one of the preceding claims, **characterized in that** the second plastics component (10) is applied after the pane (1) with its surround applied by an injection process has been placed in a template (5).

11. Process according to one of the preceding claims, **characterized in that** the primer and the second plastics component (10) are applied using a twin-head robot, the first head of which applies the primer and the second head of which applies the second plastics component (10).

## Revendications

1. Procédé pour la fabrication et le collage d'une vitre (1) encadrée d'une matière synthétique thermoplastique, avantageusement pour des véhicules automobiles, dans lequel le bord de la vitre (1), avantageusement après application d'une colle ou autre première couche (2), est couvert par extrusion d'un composant synthétique (6), **caractérisé en ce que**, sur le premier composant synthétique (6) est appliquée une première couche (9) et sur celle-ci est appliqué un second composant synthétique (10) et **en ce que** le second composant synthétique (10) est préparé par application d'une première couche longue durée (11) au collage ultérieur d'une colle synthétique.

2. Procédé de fabrication et collage d'une vitre (1) encadrée d'une matière synthétique thermoplastique, avantageusement pour des véhicules automobiles, dans lequel le bord de la vitre (1), avantageusement après application d'une colle ou d'une première couche (2), est couvert par extrusion d'un premier composant synthétique (6), **caractérisé en ce qu'**un second composant synthétique (10) est relié par liaison de forme avec le premier composant synthétique (6) et **en ce que** le second composant synthétique (10) est préparé par application d'une première couche longue durée (11), pour le collage ultérieur au moyen d'une colle synthétique.

3. Procédé selon la revendication 2, **caractérisé en ce que** sur le premier composant synthétique (6) est appliquée une première couche (9), avant que le second composant synthétique (10) ne soit lié, par liaison de forme, au premier composant synthétique (6).

4. Procédé selon l'une quelconque des revendications précédentes, **caractérisé en ce que** la vitre (1) est couverte, par extrusion, d'un premier composant synthétique (6) qui se compose de PVC, TPE ou TPU.

5. Procédé selon l'une quelconque des revendications précédentes, **caractérisé en ce que** sur le premier composant synthétique (6) est appliqué PUR en tant que second composant synthétique (10).

6. Procédé selon l'une quelconque des revendications précédentes, **caractérisé en ce que** la colle synthétique est PUR ou une colle à base de PUR.

7. Procédé selon l'une quelconque des revendications précédentes, **caractérisé en ce que** le premier composant synthétique (6) est appliqué au moyen d'une machine de moulage par injection.

8. Procédé selon l'une quelconque des revendications précédentes, **caractérisé en ce que** le premier composant synthétique (6) appliqué au pistolet est pourvu d'un canal (8) pour la réception du second composant synthétique (10).

9. Procédé selon la revendication 8, **caractérisé en ce que** le canal (8) présente un profil en forme de U avec des flancs latéraux en contre-dépouille, par exemple, en contre-dépouille en queue d'aronde.

10. Procédé selon l'une quelconque des revendications précédentes, **caractérisé en ce que** le second composant synthétique (10), après inclusion à la vitre (1) couverte par extrusion, est placé dans un gabarit (5).

11. Procédé selon l'une quelconque des revendications précédentes, **caractérisé en ce que** la première couche et le second composant synthétique (10) sont appliqués au moyen d'un robot à deux têtes dont la première tête applique la première couche et la seconde tête le second composant synthétique (10).
